# FASCICULE DE BREVET EUROPEEN

(11) **EP 0 840 681 B1**
(45) Date de publication et mention de la délivrance du brevet: **31.03.1999**
(21) Numéro de dépôt: 96926458.9
(22) Date de dépôt: 24.07.1996
(51) Int. Cl.: B60N 2/02

(54) **ENSEMBLE DE REGLAGE DE LA POSITION D'AU MOINS DEUX ORGANES D'UN VEHICULE AUTOMOBILE**
EINHEIT ZUM VERSTELLEN DER LAGE VON MINDESTENS ZWEI GLIEDERN EINES KRAFTFAHRZEUGES
ASSEMBLY FOR ADJUSTING THE POSITION OF AT LEAST TWO MOTOR VEHICLE COMPONENTS

(30) Priorité: 25.07.1995 FR 9509021
(43) Date de publication de la demande: 13.05.1998
(73) Titulaire: CESA COMPAGNIE EUROPEENNE DE SIEGES POUR AUTOMOBILES, 92307 Levallois-Perret Cédex (FR)
(72) Inventeur: FOURREY, François, F-45290 Nogent-sur-Vernisson (FR)
(74) Mandataire: Moncheny, Michel
(86) Numéro de dépôt international: FR9601168
(87) Numéro de publication internationale: WO9704985

(56) Documents cités:
- DE-A- 3 608 818
- DE-A- 3 836 019
- DE-A- 4 132 499
- FR-A- 2 592 970
- US-A- 4 809 180

## Description

La présente invention concerne un ensemble de réglage de la position d'au moins deux organes d'un véhicule automobile.

Elle s'applique en particulier au réglage de la position d'une assise et d'un dossier de siège de véhicule automobile.

On utilise de plus en plus fréquemment des moyens électriques pour régler la position de différents éléments constituant un siège pour véhicule automobile, notamment pour régler la position de l'assise et du dossier.

La multiplication des moyens électriques de réglage entraîne la multiplication des contacteurs de commande. Ces contacteurs sont très souvent disposés dans des emplacements invisibles pour l'utilisateur, lorsque ce dernier conduit le véhicule.

De plus, l'agencement des contacteurs de commande n'est pas toujours fait suivant une logique évidente pour l'utilisateur.

DE-A-36 08 818 décrit un ensemble de réglage de la position d'au moins deux organes d'un véhicule automobile, du type dans lequel chaque organe est déplaçable suivant au moins un mouvement élémentaire dans deux sens opposés au choix, l'ensemble de réglage comprenant un dispositif de commande commun pour tous les organes à régler comprenant des moyens de réglage de la position des organes, ces moyens de réglage comportant, d'une part, des moyens de sélection d'un organe à régler et d'un mouvement élémentaire de cet organe, et d'autre part, des moyens d'exécution du mouvement sélectionné dans un sens choisi, l'ensemble de réglage comprenant de plus des moyens d'affichage d'informations indiquant l'organe et le mouvement élémentaire sélectionnés.

L'invention a notamment pour but de proposer des moyens de réglage de la position de l'assise et du dossier d'un siège qui ne présentent pas les inconvénients ci-dessus et qui puissent être commandés facilement par un conducteur du véhicule.

A cet effet l'invention a pour objet un ensemble de réglage de la position d'au moins deux organes d'un véhicule automobile, du type précité, caractérisé en ce qu'il comporte des moyens d'affectation du dispositif de commande, soit au réglage de la position des organes déplaçables, soit à la commande d'au moins un autre organe non déplaçable, tel qu'un auto-radio.

Suivant d'autres caractéristiques de l'invention:
- les mouvements élémentaires sont exécutés à l'aide de moyens d'entraînement électromécaniques, et le dispositif de commande comprend un ensemble de pilotage à contacteurs électriques et une unité à microprocesseur à laquelle sont reliés l'ensemble de pilotage et les moyens d'entraînement électromécaniques,
- les moyens d'affectation comportent un contacteur électrique relié à l'unité à microprocesseur,
- l'ensemble de pilotage est placé près du volant du véhicule ou intégré dans ce volant, de manière que les contacteurs soient actionnables par les doigts d'un conducteur conservant ses mains appuyées sur le volant,
- les moyens de sélection comprennent un contacteur électrique de sélection d'organe et de mouvement élémentaire, et les moyens d'exécution du mouvement élémentaire comprennent deux contacteurs électriques commandant chacun un sens d'exécution du mouvement élémentaire, les contacteurs de sélection d'organe et de sens du mouvement étant intégrés dans l'ensemble de pilotage,
- l'ensenble de réglage comprend des moyens imposant une séquence logique de réalisation des différents réglages de position d'organes,
- le contacteur électrique de sélection est un contacteur rotatif à positions multiples indexées formant les moyens imposant une séquence logique, le déplacement de ce contacteur de sélection dans le même sens permettant de sélectionner successivement les différents organes à régler ainsi que leurs mouvements élémentaires de déplacement,
- les deux contacteurs électriques d'execution du mouvement élémentaire forment les moyens imposant une séquence logique, l'actionnement simultané de ces deux contacteurs permettant de sélectionner successivement les différents organes à régler ainsi que leurs mouvements élémentaires,
- les moyens d'affichage indiquent également le sens d'exécution du mouvement élémentaire sélectionné et la position de l'organe sélectionné,
- les moyens d'affichage comprennent un écran d'affichage de pictogrammes,
- le dispositif de commande comprend des moyens de mémorisation d'au moins deux positions d'un organe et des moyens de sélection d'une position mémorisée,
- les moyens de mémorisation comprennent un contacteur électrique d'appel sélectif d'une mémoire et un contacteur électrique d'enregistrement d'une position de l'organe dans cette mémoire, les contacteurs d'appel de mémoire et d'activation de position mémorisée étant intégrés dans l'ensemble de pilotage,
- les moyens de sélection d'une position mémorisée comprennent un contacteur électrique de rappel sélectif d'une mémoire et un contacteur électrique d'activation de la position mémorisée, les contacteurs de rappel de mémoire et d'activation de position mémorisée étant intégrés dans l'ensemble de pilotage,
- certains contacteurs sont communs à plusieurs moyens parmi les moyens de réglage de position d'organe, les moyens de mémorisation de position et les moyens de sélection d'une position mémorisée, et le dispositif de commande comprend des moyens d'activation sélective des moyens de réglage de position d'organe, des moyens de mémorisation de position et des moyens de sélection d'une position mémorisée,
- les moyens d'activation sélective comprennent un contacteur électrique intégré dans l'ensemble de pilotage,
- l'ensemble de réglage comprend des moyens de positionnement standard d'au moins un organe, comportant un contacteur électrique relié à l'unité à microprocesseur,
- l'ensemble de réglage comprend des moyens de sélection d'un mode de fonctionnement par impulsion ou par poussée continue du contacteur d'activation de position mémorisée, ces moyens de sélection de mode de fonctionnement comportant un contacteur électrique de sécurité relié à l'unité à microprocesseur,
- le contacteur de sécurité est actionné par un frein de parking du véhicule,
- les moyens d'affectation comportent un contacteur électrique relié à l'unité à microprocesseur,
- les organes à régler comprennent des éléments de siège tels qu'une assise et un dossier,
- la séquence logique comprend successivement le réglage longitudinal de l'assise, le réglage de l'inclinaison du dossier et le réglage vertical de l'assise.

L'invention sera mieux comprise à la lecture de la description qui va suivre donnée uniquement à titre d'exemple et faite en se référant aux dessins annexés dans lesquels :
- la figure 1 est une vue schématique de l'ensemble de réglage selon l'invention;
- la figure 2 est une vue de dessus de détail de l'ensemble de pilotage à contacteurs électriques;
- les figures 3 à 10 sont des vues de l'écran d'affichage dans différentes situations de réglage.

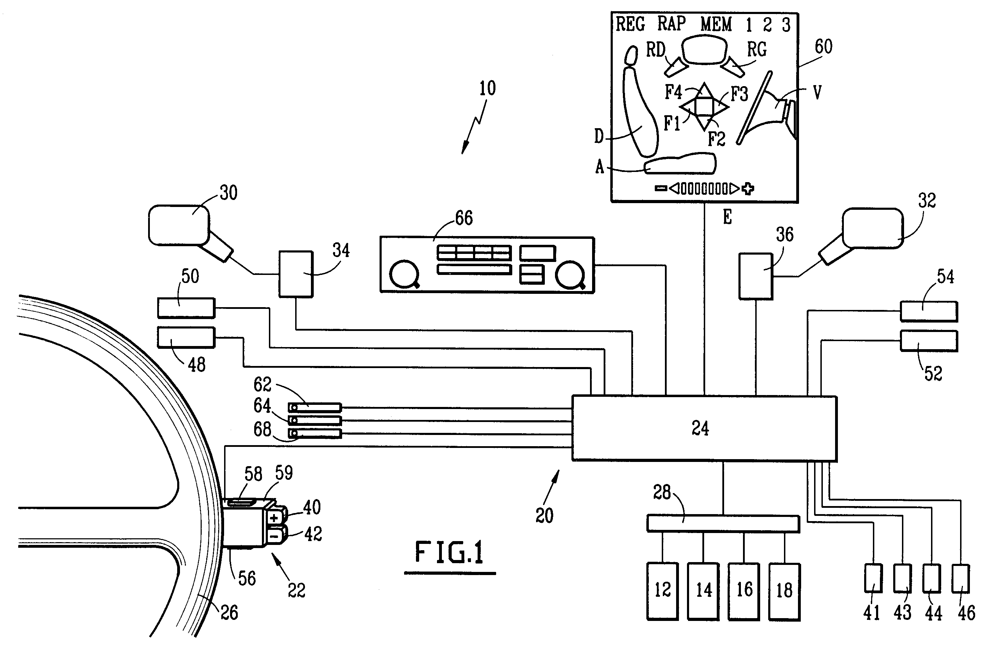

On a représenté sur la figure 1 un ensemble 10 selon l'invention pour le réglage de la position de différents organes d'un véhicule automobile. Dans l'exemple illustré sur les figures, l'ensemble 10 permet de régler la position de l'assise et du dossier d'un siège pour conducteur, du volant de direction et des rétroviseurs extérieurs gauche et droit. Il est toutefois possible de prévoir le réglage de la position d'organes supplémentaires.

De façon classique, l'assise du siège est déplaçable suivant un premier mouvement élémentaire longitudinal, dans deux sans opposés au choix, vers l'arrière ou vers l'avant, et selon un second mouvement élémentaire vertical dans deux sens opposés au choix, vers le haut ou vers le bas. Le dossier du siège est déplaçable suivant un mouvement élémentaire de basculement dans deux sens opposés au choix, vers l'avant ou vers l'arrière.

Le volant de direction et les rétroviseurs sont également déplaçables suivant un ou deux mouvements élémentaires, chacun de ces mouvements pouvant s'effectuer dans deux sens opposés au choix.

Les mouvements élémentaires associés aux différents organes sont exécutés de façon connue en soi à l'aide de moyens d'entraînement électromécaniques comportant des moteurs électriques.

Sur la figure 1, on a schématisé un moteur électrique 12 de réglage de l'inclinaison du dossier, un moteur électrique 14 de réglage longitudinal de l'assise et deux moteurs électriques 16, 18 de réglage vertical de cette assise.

L'ensemble de réglage 10 comporte un dispositif de commande 20, commun pour tous les organes à régler, comprenant un ensemble de pilotage 22 muni de cinq contacteurs électriques et une unité 24 a microprocesseur à laquelle est relié l'ensemble de pilotage 22. L'unité 24 réalise différentes fonctions de commande et de réglage qui seront précisées ci-dessous.

L'ensemble de pilotage 22 est placé près du volant 26 du véhicule, de manière que les contacteurs intégrés dans cet ensemble de pilotage soient facilement accessibles pour un conducteur en position de conduite. De préférence, l'ensemble de pilotage est porté par une colonne de direction à laquelle est relié le volant.

En variante, l'ensemble de pilotage 22 peut être intégré dans le volant.

Les moteurs électriques 12 à 18 sont reliés à l'unité 24 à microprocesseur par l'intermédiaire d'une carte électronique classique 28.

On a également représenté schématiquement sur la figure 1 les deux rétroviseurs extérieurs gauche 30 et droit 32. La position de chaque rétroviseur 30, 32 est réglée au moyen d'une paire de moteurs électriques, non représentés, reliés à l'unité 24 à microprocesseur par l'intermédiaire d'une carte électronique classique 34, 36.

On décrira ci-dessous différents moyens pour la commande et le réglage d'organes comportant entre autres l'unité 24 à microprocesseur et des contacteurs électriques reliés à cette unité.

Le dispositif de commande 20 comprend des moyens de réglage de la position des organes comprenant, d'une part, des moyens de sélection d'un organe à régler et d'un mouvement élémentaire de cet organe, et d'autre part, des moyens d'exécution du mouvement sélectionné dans un sens choisi.

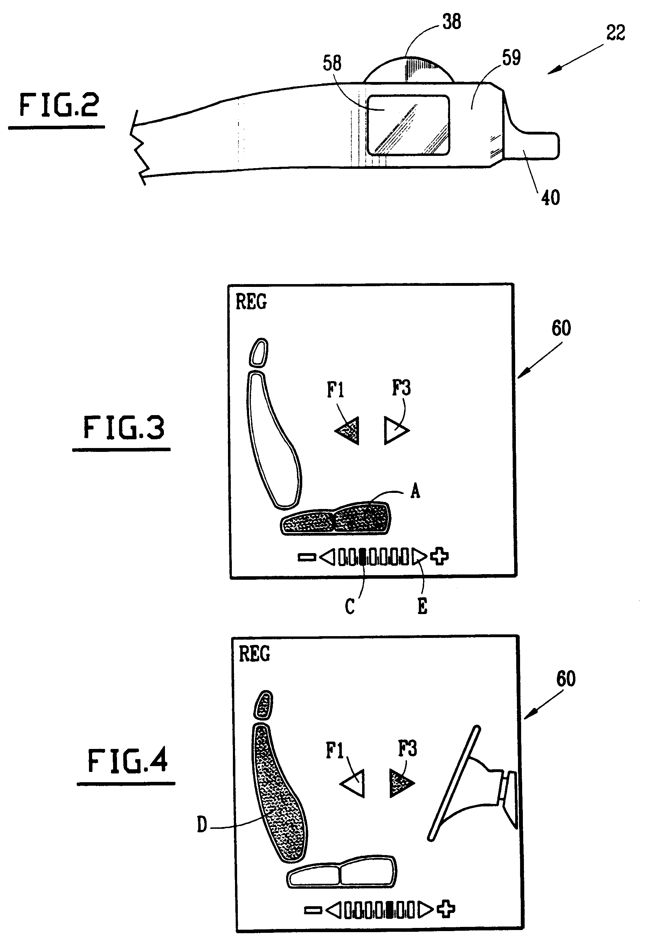

Les moyens de sélection d'un organe à régler comprennent un contacteur électrique 38, représenté sur la figure 2, intégré dans l'ensemble de pilotage 22. Ce contacteur 38 est par exemple, comme illustré sur la figure 2, un contacteur rotatif à positions multiples indexées, chaque position du contacteur correspondant à la sélection d'un organe à régler et d'un mouvement élémentaire de cet organe.

Les moyens d'exécution du mouvement sélectionné comprennent deux contacteurs 40, 42, intégrés dans l'ensemble de pilotage 22, correspondants respectivement aux deux sens d'exécution du mouvement élémentaire.

Le dispositif de réglage 20 comporte également des moyens de mémorisation d'au moins deux positions d'un organe et des moyens de sélection d'une position mémorisée. Ces moyens de mémorisation et de sélection sont constitués entre autres par l'unité 24 à microprocesseur à laquelle sont reliées des unités de mémoire 41 à 54.

Une unité de mémoire est associée à chaque moteur électrique. Ainsi, les unités de mémoire 41 à 46 sont associées aux moteurs électriques 12 à 18 de réglage du dossier et de l'assise du siège et les unités de mémoire 48 à 54 sont associées aux deux paires de moteurs de réglage des rétroviseurs extérieurs 30, 32.

Les moyens de mémorisation de position comprennent le contacteur 38, formant contacteur d'appel sélectif d'une mémoire, et un contacteur 56 électrique d'enregistrement d'une position de l'organe sélectionné, ce dernier contacteur 56 étant également intégré dans l'ensemble de pilotage 22.

Les moyens de sélection d'une position mémorisée comprennent le contacteur 38, formant contacteur de rappel sélectif d'une mémoire, et le contacteur 56, formant contacteur d'activation de la position mémorisée.

Certains contacteurs étant communs à plusieurs moyens parmi les moyens de réglage de position, les moyens de mémorisation de position et les moyens de sélection de position mémorisée, le dispositif de commande 20 est muni de moyens d'activation sélective des moyens de réglage suivant un mode dit de "réglage", des moyens de mémorisation suivant un mode dit de "mémorisation" et des moyens de sélection de position mémorisée suivant un mode dit de "rappel".

Les moyens d'activation comprennent un contacteur électrique 58 intégré dans l'ensemble de pilotage 22.

L'ensemble de pilotage 22 comporte un boîtier 59 de forme générale prismatique sur lequel sont agencés les différents contacteurs de cet ensemble 22.

Le contacteur rotatif 38 est agencé sur une face arrière du boîtier 59, les deux contacteurs 40, 42 sont agencés sur une face d'extrémité de ce boîtier 59, et les deux autres contacteurs 56, 58 sont agencés respectivement sur des faces inférieure et supérieure du boîtier 59.

L'ensemble de réglage 10 comporte également des moyens d'affichage d'informations indiquant l'organe à régler sélectionné, le mouvement élémentaire sélectionné, le sens d'exécution du mouvement sélectionné et la position de l'organe sélectionné.

De préférence, les moyens d'affichage comprennent un écran 60 d'affichage de pictogrammes, comme cela est représenté sur la figure 1. L'écran 60 est par exemple du type à cristaux liquides.

L'écran 60 est placé de manière avantageuse sur la planche de bord du véhicule.

Les pictogrammes symbolisent un siège comportant une assise A et un dossier D, un volant V, un rétroviseur extérieur droit RD, un rétroviseur extérieur gauche RG, quatre flèches F1 à F4 indiquant les sens d'exécution des mouvements élémentaires et une échelle graduée linéaire E indiquant la position d'un organe par rapport à ses positions extrêmes.

On notera que certaines informations affichées sur l'écran 60 sont facultatives, notamment le sens d'exécution du mouvement sélectionné et la position de l'organe sélectionné.

Afin de permettre à un utilisateur de s'installer facilement dans le siège, l'ensemble de réglage 10 comporte des moyens de positionnement standard de l'assise et du dossier du siège comportant un contacteur électrique 62 séparé de l'ensemble de pilotage 22 et relié à l'unité 24 à microprocesseur.

Ce contacteur 62 est placé de préférence à proximité de la portière d'accès au siège, de manière qu'un utilisateur puisse l'actionner avant de s'installer dans le siège. L'utilisateur peut ainsi placer le siège dans une position standard d'accès facile dans le cas où le précédent utilisateur aurait laissé ce siège dans une position extrême d'accès difficile.

Afin d'éviter un déplacement inopiné du siège lorsque le véhicule est en marche, l'ensemble de réglage 10 comporte des moyens de sélection d'un mode de fonctionnement par impulsion ou par poussée continue du contacteur 56 d'activation de position mémorisée. Ces moyens de sélection comprennent un contacteur électrique de sécurité 64 séparé de l'ensemble de pilotage 22 et relié à l'unité 24 à microprocesseur. Ce contacteur 64 est actionné par exemple par le frein de parking du véhicule.

L'ensemble de réglage 10 comporte éventuellement des moyens d'affectation du dispositif de commande 20, soit au réglage de la position des organes déplaçables, soit à la commande d'au moins un autre organe non déplaçable tel qu'un auto-radio 66 relié à l'unité 24 à microprocesseur. Ces moyens d'affectation comprennent un contacteur électrique 68 relié à l'unité 24 à microprocesseur, éventuellement séparé de l'ensemble de pilotage 22.

On décrira ci-dessous un exemple de séquence de fonctionnement de l'ensemble de réglage selon l'invention.

Avant de s'installer dans son siège, le conducteur actionne le contacteur 62 de positionnement standard du siège. Il accède ainsi facilement à ce dernier.

Une fois installé, le conducteur actionne le contacteur 68 de manière à affecter le dispositif de commande 20 au réglage de la position des différents organes déplaçables, notamment de l'assise et du dossier du siège.

L'unité 24 à microprocesseur commande alors automatiquement le mode de réglage et l'affichage sur l'écran 60 de pictogrammes concernant le réglage longitudinal de l'assise, comme cela est représenté sur la figure 3. On voit alors sur l'écran 60 le pictogramme représentant le siège dont l'assise A est ombrée, les flèches F1, F3 de réglage longitudinal et l'échelle E comportant un curseur ombré C. Le mode de réglage est indiqué par la mention "REG" qui s'inscrit en haut de l'écran.

L'actionnement des contacteurs d'extrémité 40, 42 permet de faire avancer ou reculer l'assise A. Selon le sens de déplacement de l'assise, la flèche F1 ou F3 est ombrée et clignote.

Au cours du réglage de la position longitudinale de l'assise, le curseur C se déplace le long des graduations de l'échelle E pour indiquer la position de cette assise par rapport à ses positions extrêmes.

En déplaçant le contacteur arrière 38, on sélectionne l'organe suivant à régler, à savoir le dossier D du siège qui, à son tour, est ombré. Le réglage de l'inclinaison du dossier se fait de façon analogue au réglage de la position longitudinale de l'assise au moyen des deux contacteurs d'extrémité 40, 42 (voir figure 4).

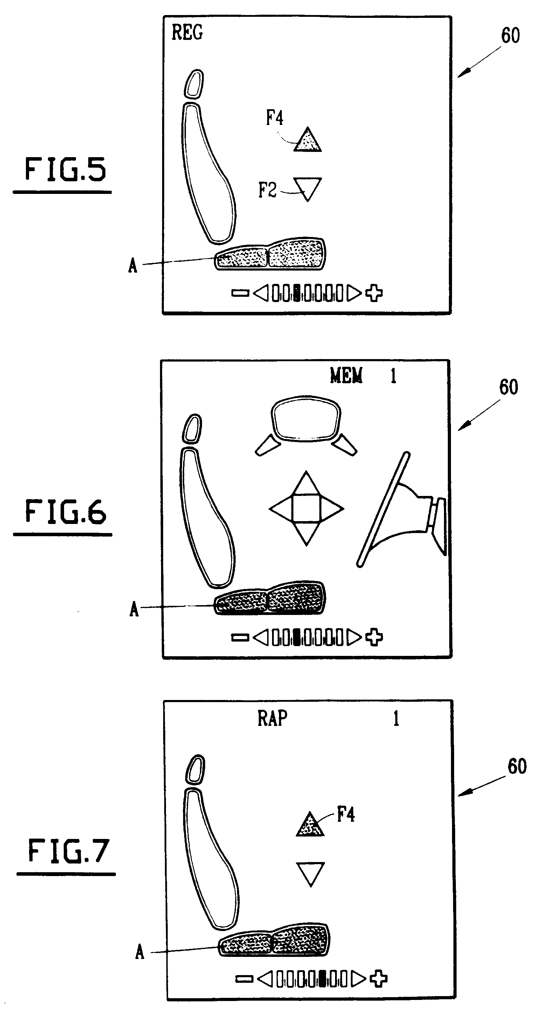

En déplaçant encore le contacteur arrière 38 dans le même sens que précédemment, on sélectionne le réglage vertical de l'assise. L'assise A est à nouveau ombrée, mais cette fois-ci se sont les flèches F2, F4 de réglage vertical de l'assise qui apparaissent sur l'écran 60, comme cela est représenté sur la figure 5.

En déplaçant le contacteur arrière 38 toujours dans le même sens, on sélectionne successivement les différents organes à régler ainsi que leurs mouvements élémentaires de déplacement (mouvement vertical, mouvement horizontal, basculement...). Bien entendu, on peut déplacer le contacteur arrière 38 dans un sens opposé pour revenir à un réglage précédent.

On notera donc que le contacteur arrière 38 impose une séquence logique de réalisation des différents réglages de position.

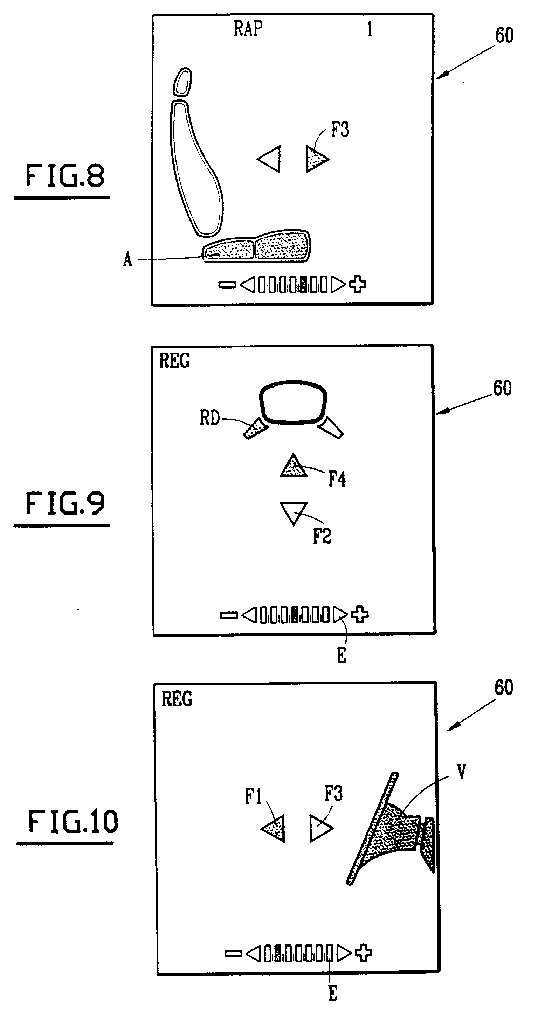

On a représenté sur la figure 9 les pictogrammes apparaissant à l'écran lors du réglage de la position du rétroviseur extérieur droit et sur la figure 10 les pictogrammes apparaissant à l'écran lors du réglage de la position du volant.

Selon que l'on déplace le contacteur arrière 38 dans un sens ou dans un autre, on fait défiler les différents réglages possibles dans un sens ou dans un autre. En variante, le défilement des différents réglages peut être commandé en actionnant simultanément les deux contacteurs d'extrémité 40, 42. Dans ce cas, des actionnements successifs des deux contacteurs 40, 42 à la fois permettent de sélectionner différents organes à régler ainsi que leurs mouvements élémentaires.

Dans l'exemple décrit, l'ensemble de réglage comporte trois mémoires susceptibles de mémoriser trois positions différentes des organes réglables. Pour mémoriser la position d'un organe, par exemple de l'assise, on procède de la façon suivante.

Après avoir déterminé la position à mémoriser, on passe du mode de réglage au mode de mémorisation en actionnant deux fois le contacteur supérieur 58. La mention "MEM 1" apparaît en haut de l'écran 60, comme cela est représenté sur la figure 6. Dans ce cas, l'assise A est ombrée. En déplaçant le contacteur arrière 38, on sélectionne une des trois mémoires. Puis, en actionnant le contacteur inférieur 56, on enregistre la position de l'assise dans la mémoire sélectionnée. L'actionnement du contacteur inférieur 56 commande simultanément le retour au mode de réglage et peut être accompagné d'un bip sonore.

Si l'on veut sélectionner une position mémorisée, on active le mode de rappel en actionnant une seule fois le contacteur supérieur 58. La mention "RAP 1" s'inscrit alors en haut de l'écran 60, comme cela est représenté sur les figures 7 et 8. Puis, on déplace le contacteur arrière 38 pour rappeler la mémoire souhaitée et enfin on actionne le contacteur inférieur 56 pour activer la position mémorisée sélectionnée. Comme dans le mode de mémorisation, l'actionnement du contacteur inférieur 56 commande simultanément le retour au mode de réglage et peut être accompagné d'un bip sonore.

Les pictogrammes de l'écran indiquent alors les déplacements des organes vers leur position mémorisée activée ainsi que cette position. Sur la figure 7, l'assise rejoint sa position mémorisée en se déplaçant vers le haut. Sur la figure 8, l'assise rejoint sa position mémorisée en se déplaçant vers l'avant.

On notera que lorsque le véhicule est à l'arrêt, le frein de parking étant activé, le contacteur 64 est dans une position de sélection d'un mode de fonctionnement par impulsion du contacteur inférieur 56 d'activation de position mémorisée. Ainsi, l'actionnement de ce contacteur 56 provoque le déplacement de l'organe correspondant vers sa position mémorisée, ceci même après relâchement du contacteur 56.

Par contre, lorsque le véhicule est en marche, le frein de parking est désactivé et le contacteur 64 est dans une position de sélection d'un mode de fonctionnement par poussée continue du contacteur inférieur 56. Dans ce cas, le déplacement de l'organe correspondant vers sa position mémorisée est interrompu dès relâchement du contacteur inférieur 56.

On peut ainsi éviter le déplacement inopiné d'un des éléments du siège vers une position mémorisée, lorsque le conducteur est assis dans ce siège et que le véhicule se déplace.

L'invention comporte de nombreux avantages.

Le conducteur peut régler le siège dans lequel il était installé en agissant du bout des doigts sur les contacteurs de l'ensemble de pilotage, ses mains restant appuyées sur le volant en position de conduite.

L'écran permet de visualiser l'organe en cours de réglage ainsi que différents paramètres de ce réglage, ceci en permettant au conducteur de continuer à regarder la route sans perturber sa position de conduite.

L'ensemble de réglage selon l'invention peut régler la position d'un grand nombre d'organes, ceci au moyen d'un nombre limité de contacteurs indépendants du nombre d'organes à régler.

L'ensemble de réglage selon l'invention permet de proposer au conducteur une séquence logique de réglage de la position de différents organes du véhicule. Cette séquence peut comporter la commande par l'ensemble de pilotage d'un organe quelconque, déplaçable ou non.

## Revendications

1. Ensemble de réglage de la position d'au moins deux organes (A, D, RD, RG, V) d'un véhicule automobile, du type dans lequel chaque organe est déplaçable suivant au moins un mouvement élémentaire dans deux sens opposés au choix, l'ensemble de réglage comprenant un dispositif de commande (20) commun pour tous les organes à régler comprenant des moyens de réglage de la position des organes, ces moyens de réglage comportant, d'une part, des moyens (38) de sélection d'un organe à régler et d'un mouvement élémentaire de cet organe, et d'autre part, des moyens (40, 42) d'exécution du mouvement sélectionné dans un sens choisi, l'ensemble de réglage comprenant de plus des moyens (60) d'affichage d'informations indiquant l'organe et le mouvement élémentaire sélectionnés, caractérisé en ce qu'il comporte des moyens (68) d'affectation du dispositif de commande (20), soit au réglage de la position des organes déplaçables, soit à la commande d'au moins un autre organe non déplaçable, tel qu'un auto-radio.

2. Ensemble de réglage selon la revendication 1, caractérisé en ce que les mouvements élémentaires sont exécutés à l'aide de moyens d'entraînement électromécaniques (12 à 18, 48 à 54), et en ce que le dispositif de commande comprend un ensemble de pilotage (22) à contacteurs électriques et une unité (24) à microprocesseur à laquelle sont reliés l'ensemble de pilotage et les moyens d'entraînement électromécaniques.

3. Ensemble de réglage selon la revendication 2, caractérisé en ce que les moyens d'affectation comportent un, contacteur électrique (68) relié à l'unité (24) à microprocesseur.

4. Ensemble de réglage selon la revendication 2 ou 3, caractérisé en ce que l'ensemble de pilotage (22) est placé près du volant du véhicule ou intégré dans ce volant, de manière que les contacteurs (38 à 42, 56, 58) soient actionnables par les doigts d'un conducteur conservant ses mains appuyées sur le volant.

5. Ensemble de réglage selon l'une quelconque des revendications 2 à 4, caractérisé en ce que les moyens de sélection comprennent un contacteur électrique (38) de sélection d'organe et de mouvement élémentaire, et en ce que les moyens d'exécution du mouvement élémentaire comprennent deux contacteurs électriques (40, 42) commandant chacun un sens d'exécution du mouvement élémentaire, les contacteurs de sélection d'organe et de sens du mouvement étant intégrés dans l'ensemble de pilotage (22).

6. Ensemble de réglage selon l'une quelconque des revendications 1 à 5, caractérisé en ce qu'il comprend des moyens (38;40,42) imposant une séquence logique de réalisation des différents réglages de position d'organes.

7. Ensemble de réglage selon les revendications 5 et 6 prises ensemble, caractérisé en ce que le contacteur électrique de sélection (38) est un contacteur rotatif à positions multiples indexées formant les moyens imposant une séquence logique, le déplacement de ce contacteur de sélection (38) dans le même sens permettant de sélectionner successivement les différents organes à régler ainsi que leurs mouvements élémentaires de déplacement.

8. Ensemble de réglage selon les revendications 5 et 6 prises ensemble, caractérisé en ce que les deux contacteurs électriques (40,42) d'execution du mouvement élémentaire forment les moyens imposant une séquence logique, l'actionnement simultané de ces deux contacteurs (40,42) permettant de sélectionner successivement les différents organes à régler ainsi que leurs mouvements élémentaires.

9. Ensemble de réglage selon l'une quelconque des revendications précédentes, caractérisé en ce que les moyens d'affichage (60) indiquent également le sens d'exécution du mouvement élémentaire sélectionné et la position de l'organe sélectionné.

10. Ensemble de réglage selon l'une quelconque des revendications précédentes, caractérisé en ce que les moyens d'affichage comprennent un écran (60) d'affichage de pictogrammes (A, D, E, RD, RG, V).

11. Ensemble de réglage selon l'une quelconque des revendications précédentes, caractérisé en ce que le dispositif de commande (20) comprend des moyens (38, 56) de mémorisation d'au moins deux positions d'un organe et des moyens (38, 56) de sélection d'une position mémorisée.

12. Ensemble de réglage selon les revendications 2 et 11 prises ensemble, caractérisé en ce que les moyens de mémorisation comprennent un contacteur électrique (38) d'appel sélectif d'une mémoire et un contacteur électrique (56) d'enregistrement d'une position de l'organe dans cette mémoire, les contacteurs d'appel de mémoire et d'activation de position mémorisée étant intégrés dans l'ensemble de pilotage (22).

13. Ensemble de réglage selon les revendications 2 et 11 prises ensemble, caractérisé en ce que les moyens de sélection d'une position mémorisée comprennent un contacteur électrique (38) de rappel sélectif d'une mémoire et un contacteur électrique (56) d'activation de la position mémorisée, les contacteurs de rappel de mémoire et d'activation de position mémorisée étant intégrés dans l'ensemble de pilotage (22).

14. Ensemble de réglage selon les revendications 2 et 11 prises ensemble, caractérisé en ce que certains contacteurs sont communs à plusieurs moyens parmi les moyens (38 à 42) de réglage de position d'organe, les moyens (38, 56) de mémorisation de position et les moyens (38, 56) de sélection d'une position mémorisée, et en ce que le dispositif de commande (20) comprend des moyens (58) d'activation sélective des moyens de réglage de position d'organe, des moyens de mémorisation de position et des moyens de sélection d'une position mémorisée.

15. Ensemble de réglage selon la revendication 14, caractérisé en ce que les moyens d'activation sélective comprennent un contacteur électrique (58) intégré dans l'ensemble de pilotage (22).

16. Ensemble de réglage selon l'une quelconque des revendications 2 à 15, caractérisé en ce qu'il comprend des moyens de positionnement standard d'au moins un organe, comportant un contacteur électrique (62) relié à l'unité (24) à microprocesseur.

17. Ensemble de réglage selon les revendications 2 et 13 prises ensemble, caractérisé en ce qu'il comprend des moyens de sélection d'un mode de fonctionnement par impulsion ou par poussée continue du contacteur (56) d'activation de position mémorisée, ces moyens de sélection de mode de fonctionnement comportant un contacteur électrique de sécurité (64) relié à l'unité (24) à microprocesseur.

18. Ensemble de réglage selon la revendication 17, caractérisé en ce que le contacteur de sécurité (64) est actionné par un frein de parking du véhicule.

19. Ensemble de réglage selon l'une quelconque des revendications 1 à 18, caractérisé en ce que les organes à régler comprennent des éléments de siège tels qu'une assise (A) et un dossier (D).

20. Ensemble de réglage selon les revendications 6 et 19 prises ensemble, caractérisé en ce que la séquence logique comprend successivement le réglage longitudinal de l'assise, le réglage de l'inclinaison du dossier et le réglage vertical de l'assise.

## Claims

1. Assembly for adjusting the position of at least two components (A, D, RD, RG, V) of a motor vehicle, of the type in which each component can move with at least one elemental movement in two opposite directions as desired, the adjusting assembly comprising a control device (20) that is common to all the components to be adjusted and comprises means for adjusting the position of the components, these adjusting means comprising, on the one hand, means (38) of selecting a component to be adjusted and of selecting an elemental movement for this component and, on the other hand, means (40, 42) of executing the selected movement in a chosen direction, the adjusting assembly additionally comprising means (60) of displaying information indicating the component and the elemental movement that have been selected, characterized in that this assembly comprises means (68) of tasking the control device (20) either with adjusting the position of the movable components or with controlling at least one other non-movable component, such as a car radio.

2. Adjusting assembly according to Claim 1, characterized in that the elemental movements are executed with the aid of electromechanical drive means (12 to 18, 48 to 54), and in that the control device comprises an operating assembly (22) with electric switches and a microprocessor unit (24) to which the operating assembly and the electromechanical drive means are connected.

3. Adjusting assembly according to Claim 2, characterized in that the tasking means comprise an electric switch (68) connected to the microprocessor unit (24).

4. Adjusting assembly according to Claim 2 or 3, characterized in that the operating assembly (22) is placed close to the vehicle steering wheel or incorporated into this steering wheel so that the switches (38 to 42, 56, 58) can be operated by the fingers of a driver who keeps his hands on the steering wheel.

5. Adjusting assembly according to any one of Claims 2 to 4, characterized in that the selection means comprise an electric switch (38) for selecting the component and the elemental movement and in that the means of executing the elemental movement comprise two electric switches (40, 42) each controlling one direction of execution of the elemental movement, the switches for selecting the component and for selecting the direction of the movement being incorporated into the operating assembly (22).

6. Adjusting assembly according to any one of Claims 1 to 5, characterized in that it comprises means (38; 40, 42) that impose a logical sequence in which the various adjustments of the positions of the components are performed.

7. Adjusting assembly according to Claims 5 and 6 taken together, characterized in that the electric selector switch (38) is a rotary switch with numerous indexed positions forming the means that impose a logical sequence, moving this selector switch (38) in the same direction allowing the various components that are to be adjusted, and their elemental movements, to be selected in turn.

8. Adjusting assembly according to Claims 5 and 6 taken together, characterized in that the two electric switches (40, 42) for executing the elemental movement form the means that impose a logical sequence, simultaneous operation of these two switches (40, 42) allowing the various components to be adjusted, and their elemental movements, to be selected in turn.

9. Adjusting assembly according to any one of the preceding claims, characterized in that the display means (60) also indicate the direction of execution of the elemental movement selected and the position of the selected component.

10. Adjusting assembly according to any one of the preceding claims, characterized in that the display means comprise a screen (60) on which pictorial images (A, D, E, RD, RG, V) are displayed.

11. Adjusting assembly according to any one of the preceding claims, characterized in that the control device (20) comprises means (38, 56) of storing in memory at least two positions of a component and means (38, 56) of selecting a stored position.

12. Adjusting assembly according to Claims 2 and 11 taken together, characterized in that the memory storage means comprise an electric switch (38) which selectively calls from a memory and an electric switch (56) for recording a position of the component in this memory, the memory-recall and stored-position activation switches being incorporated into the operating assembly (22).

13. Adjusting assembly according to Claims 2 and 11 taken together, characterized in that the means of selecting a stored position comprise an electric switch (38) for selectively recalling from a memory and an electric switch (56) for activating the memory stored position, the memory-recall and stored-position activation switches being incorporated into the operating assembly (22).

14. Adjusting assembly according to Claims 2 and 11 taken together, characterized in that certain switches are common to several means from among the means (38 to 42) of adjusting the position of the component, the means (38, 56) of storing the position in memory, and the means (38, 56) of selecting a stored position; and in that the control device (20) comprises means (58) of selectively activating the means of adjusting the position of the component, the means of storing a position in the memory, and the means of selecting a stored position.

15. Adjusting assembly according to Claim 14, characterized in that the means of selective activation comprise an electric switch (58) incorporated into the operating assembly (22).

16. Adjusting assembly according to any one of Claims 2 to 15, characterized in that it comprises means of placing at least one component in a standard position, these means comprising an electric switch (62) connected to the microprocessor unit (24).

17. Adjusting assembly according to Claims 2 and 13 taken together, characterized in that it comprises means of selecting an operating mode using pulses or using continuous depression on the switch (56) for activating the stored position, these means of selecting the operating mode comprising an electric safety switch (64) connected to the microprocessor unit (24).

18. Adjusting assembly according to Claim 17, characterized in that the safety switch (64) is actuated by a vehicle parking brake.

19. Adjusting assembly according to any one of Claims 1 to 18, characterized in that the components to be adjusted comprise parts of the seat such as a seat cushion (A) and a backrest (D).

20. Adjusting assembly according to Claims 6 and 19 taken together, characterized in that the logical sequence comprises adjusting the longitudinal position of the seat cushion, adjusting the inclination of the backrest and vertically adjusting the seat cushion in turn.

## Patentansprüche

1. Einheit zum Verstellen der Lage von mindestens zwei Gliedern (A, D, RD, RG, V) eines Kraftfahrzeugs, bei der jedes Glied nach mindestens einer Grundbewegung in zwei entgegengesetzte Richtungen zur Wahl verschiebbar ist, wobei die Einheit zum Verstellen eine gemeinsame Steuervorrichtung (20) für alle zu verstellenden Glieder, die Mittel zur Verstellung der Lage der Glieder umfassen, besitzt, wobei diese Mittel zum Verstellen einerseits Mittel (38) zur Auswahl eines zu verstellenden Gliedes und einer Grundbewegung dieses Gliedes und andererseits Mittel (40, 42) für die Ausführung der ausgewählten Bewegung in eine gewählte Richtung umfassen, wobei die Einheit zum Verstellen ferner Mittel (60) zur Anzeige von Informationen besitzt, die das ausgewählte Glied und die ausgewählte Grundbewegung anzeigen, dadurch gekennzeichnet, daß sie Mittel (68) zur Zuteilung der Steuervorrichtung (20) entweder für die Verstellung der Lage der verschiebbaren Glieder oder für die Steuerung von mindestens einem nicht verschiebbaren Glied, wie beispielsweise einem Autoradio, umfaßt.

2. Verstelleinheit nach Anspruch 1, dadurch gekennzeichnet, daß die Grundbewegungen mit Hilfe von elektromechanischen Antriebsmitteln (12 bis 18, 48 bis 54) ausgeführt werden, und daß die Steuervorrichtung eine Steuereinheit (22) mit elektrischen Schützen und eine Mikroprozessoreinheit (24) umfaßt, mit der die Steuereinheit und die elektromechanischen Antriebsmittel verbunden sind.

3. Verstelleinheit nach Anspruch 2, dadurch gekennzeichnet, daß die Zuteilungsmittel ein elektrischcs Schütz (68), das mit der Mikroprozessoreinheit (24) verbunden ist, umfassen.

4. Verstelleinheit nach Anspruch 2 oder 3, dadurch gekennzeichnet, daß die Steuereinheit (22) in der Nähe des Lenkrades des Fahrzeugs angeordnet oder in dieses Lenkrad integriert ist, so daß die Schütze (38 bis 42, 56, 58) mit den Fingern eines Fahrers betätigt werden können, der seine Hände auf dem Lenkrad belassen kann.

5. Verstelleinheit nach einem der Ansprüche 2 bis 4, dadurch gekennzeichnet, daß die Auswahlmittel ein elektrisches Schütz (38) zur Auswahl eines Gliedes und einer Grundbewegung umfassen, und daß die Mittel zur Ausführung der Grundbewegung zwei elektrische Schütze (40, 42) umfassen, die jeweils eine Richtung der Ausführung der Grundbewegung steuern, wobei die Schütze zur Auswahl eines Gliedes und einer Bewegungsrichtung in die Steuereinheit (22) integriert sind.

6. Verstelleinheit nach einem der Ansprüche 1 bis 5, dadurch gekennzeichnet, daß sie Mittel (38; 40, 42) umfaßt, die eine logische Folge der Durchführung der verschiedenen Verstellungen der Lage von Gliedern vorgeben.

7. Verstelleinheit nach den Ansprüchen 5 und 6 gemeinsam, dadurch gekennzeichnet, daß das elektrische Auswahlschütz (38) ein Drehschütz mit mehreren Schaltpositionen ist, die die Mittel bilden, die eine logische Folge vorgeben, wobei die Verschiebung dieses Auswahlschützes (38) in dieselbe Richtung es ermöglicht, aufeinanderfolgend die verschiederen zu verstellenden Glieder sowie ihre Grundverschiebebewegungen auszuwählen.

8. Verstelleinheit nach den Ansprüchen 5 und 6 gemeinsam, dadurch gekennzeichnet, daß die beiden elektrischen Schütze (40, 42) für die Ausführung der Grundbewegung die Mittel bilden, die eine logische Folge vorgehen, wobei es die gleichzeitige Betätigung dieser beiden Schütze (40, 42) ermöglicht, aufeinanderfolgend die verschiedenen zu verstellenden Glieder sowie ihre Grundbewegungen auszuwählen.

9. Verstelleinheit nach einem der vorhergehenden Ansprüche, dadurch gekennzeichnet, daß die Anzeigemittel (60) auch die Richtung der Ausführung der ausgewählten Grundbewegung und die Lage des ausgewählten Gliedes angeben.

10. Verstelleinheit nach einem der vorhergehenden Ansprüche, dadurch gekennzeichnet, daß die Anzeigemittel einen Bildschirm (60) zur Anzeige von Piktogrammen (A, D, E, RD, RG, V) umfassen.

11. Verstelleinheit nach einem der vorhergehenden Ansprüche, dadurch gekennzeichnet, daß die Steuervorrichtung (20) Mittel (38, 56) zur Speicherung von mindestens zwei Lagen eines Gliedes und Mittel (38, 56) zur Auswahl einer gespeicherten Lage umfassen.

12. Verstelleinheit nach den Ansprüchen 2 und 11 gemeinsam, dadurch gekennzeichnet, daß die Speichermittel ein elektrisches Schütz (38) für den selektiven Aufruf eines Speichers und ein elektrisches Schütz (56) für die Aufzeichnung einer Lage eines Gliedes in diesem Speicher umfassen, wobei die Schütze für den Speicheraufruf und die Aktivierung der gespeicherten Lage in die Steuereinheit (22) integriert sind.

13. Verstelleinheit nach den Ansprüchen 2 und 11 gemeinsam, dadurch gekennzeichnet, daß die Mittel zur Auswahl einer gespeicherten Lage ein elektrisches Schütz (38) für den selektiven Aufruf eines Speichers und ein elektrisches Schütz (56) für die Aktivierung der gespeicherten Lage umfassen, wobei die Schütze für den Speicheraufruf und die Aktivierung der gespeicherten Lage in die Steuereinheit (22) integriert sind.

14. Verstelleinheit nach den Ansprüchen 2 und 11 gemeinsam, dadurch gekennzeichnet, daß manche Schütze mehreren Mitteln unter den Mitteln (38 bis 42) zum Verstellen der Lage eines Gliedes, den Mitteln (38, 56) zur Speicherung der Lage und den Mitteln (38, 56) zur Auswahl einer gespeicherten Lage gemein sind, und daß die Steuervorrichtung (20) Mittel (58) zur selektiven Aktivierung der Mittel zur Steuerung der Lage eines Gliedes, Mittel zur Speicherung der Lage und Mittel zur Auswahl einer gespeicherten Lage umfaßt.

15. Verstelleinheit nach Anspruch 14, dadurch gekennzeichnet, daß die Mittel zur selektiven Aktivierung ein elektrisches Schutz (58), das in die Steuereinheit (22) integriert ist, umfassen.

16. Verstelleinheit nach einem der Ansprüche 2 bis 15, dadurch gekennzeichnet, daß sie Mittel zur Standardpositionierung von mindestens einem Glied umfaßt, bestehend aus einem elektrischen Schütz (62), das mit der Mikroprozessoreinheit (24) verbunden ist.

17. Verstelleinheit nach den Ansprüchen 2 und 13 gemeinsam, dadurch gekennzeichnet, daß sie Mittel zur Auswahl einer Betriebsart durch Impuls oder durch kontinuierlichen Schub des Schützes (56) zur Aktivierung der gespeicherten Position umfaßt, wobei diese Mittel zur Auswahl der Betriebsart ein elektrisches Sicherheitsschütz (64) umfassen, das mit der Mikroprozessoreinheit (24) verbunden ist.

18. Verstelleinheit nach Anspruch 17, dadurch gekennzeichnet, daß das Sicherheitsschütz (64) durch eine Parkbremse des Fahrzeugs betätigt wird.

19. Verstelleinheit nach einem der Ansprüche 1 bis 18, dadurch gekennzeichnet, daß die zu verstellenden Glieder Sitzelemente, wie beispielsweise eine Sitzfläche (A) und eine Rückenlehne (D), umfassen.

20. Verstelleinheit nach den Ansprüchen 6 und 19 gemeinsam, dadurch gekennzeichnet, daß die logische Folge aufeinanderfolgend die Längsverstellung der Sitzfläche, die Verstellung der Neigung der Rückenlehne und die Vertikalverstellung der Sitzfläche umfaßt.
